# EUROPEAN PATENT SPECIFICATION

(11) **EP 2 350 683 B1**
(45) Date of publication and mention of the grant of the patent: **04.01.2017**
(21) Application number: 09822876.0
(22) Date of filing: 06.10.2009
(51) Int. Cl.: G01S 5/22, F41H 1/02, F41H 13/00, F41G 3/14, F41J 5/06, H04R 5/027, H04R 3/00

(54) **WEARABLE SHOOTER LOCALIZATION SYSTEM**
TRAGBARES SCHÜTZENLOKALISIERUNGSSYSTEM
SYSTÈME PORTATIF DE LOCALISATION DE TIREUR

(30) Priority: 06.10.2008 US 102902 P
(43) Date of publication of application: 03.08.2011
(73) Proprietor: Raytheon BBN Technologies Corp., Cambridge, MA 02138-1119 (US)
(72) Inventor: MULLEN, Richard, Needham, MA 02494 (US); CIOSEK, Richard, Framingham, MA 01701 (US); FOWLER, Ronald, A., Westford, MA 01886 (US); FOTHERGILL, Francis, J., Reading, MA 01867 (US); MCGURRIN, Robert, Arlington, MA 02476 (US); MAZUREK, Jeffrey, Harvard, MA 01451 (US); DAILY, Matthew, Portsmouth, RI 02871 (US)
(74) Representative: Carpmaels & Ransford LLP
(86) International application number: PCT/US2009/005483
(87) International publication number: WO 2010/077254

(56) References cited:
- GB-A- 2 309 301
- US-A- 5 831 936
- US-A1- 2005 237 186
- US-B1- 6 178 141
- SCANLON M V: "Helmet-mounted acoustic array for hostile fire detection and localization in an urban environment" PROCEEDINGS OF THE SPIE - THE INTERNATIONAL SOCIETY FOR OPTICAL ENGINEERING, vol. 6963, 3 April 2008 (2008-04-03), pages 1-13, XP002589729 USA ISSN: 0277-786X DOI: 10.1117/12.784471
- VOLGYESI P; BALOGH G; NADAS A; NASH C B; LEDECZI A: "Shooter localization and weapon classification with soldier-wearable networked sensors" MOBISYS'07: PROCEEDINGS OF THE 5TH INTERNATIONAL CONFERENCE ON MOBILE SYSTEMS, APPLICATIONS AND SERVICES, 2007, pages 113-126, XP002589730 DOI: 10.1145/1247660.1247676 ISBN: 978-1-59593-614-1

## Description

### BACKGROUND

### 1. Field of the Invention

This invention relates generally to personnel protection systems and more specifically to a wearable system for determining the origin of a projectile.

### 2. Description of Related Art

In combat zones and other locations where concealed enemies may shoot at people or vehicles, it is desirable to be able to quickly identify the origin of a projectile, such as a bullet. By determining the origin of the projectile, the location of a shooter of that projectile can be identified, and defensive measures, such as moving away from the shooter or suppressing the shooter's ability to continue shooting, can be taken.

Examples of shooter localization systems are provided in U.S. Patents 7,126,877; 7,190,633; 7,292,501; 7,359,285; 7,372,772; and 7,408,840. Systems as described in these patents have been constructed for mounting on Humvees and other vehicles deployed in conflict areas.

Such systems employ arrays of acoustic sensors that can detect both shock waves generated as a projectile travels through air and the weapon's muzzle blast that follows. Those shock waves and muzzle blasts propagate to the acoustics sensors, where they are detected. As a projectile passes the system, its shock wave and the associated weapon's muzzle blast will reach different sensors in the array at different times, depending on the origin and trajectory of the projectile. By comparing arrival times of signals received at different sensors of the array, the trajectory of a projectile may be determined. Through a series of mathematical calculations, the trajectory of the projectile may be extended back to the source of the projectile, revealing the location of the shooter who launched the projectile. It is not necessary that the muzzle blast signal be recognized, but it is helpful to the solution when it is.

US6178141B1 describes a low cost and highly accurate sniper detection and localization system uses observations of the shock wave from supersonic bullets to estimate the bullet trajectory, Mach number, and caliber. The system may be fixed or portable and may be wearable on a user's body. The system utilizes a distributed array of acoustic sensors to detect the projectile's shock wave and the muzzle blast from a firearm. A very accurate model of the bullet ballistics and acoustic radiation is used which includes bullet deceleration. This allows the use of very flexible acoustic sensor types and placements, since the system can model the bullet's flight, and hence the acoustic observations, over a wide area very accurately. System sensor configurations can be as simple as two small three element tetrahedral microphone arrays on either side of the area to be protected or six omnidirectional microphones spread over the area to be monitored. Sensors may also be monitored to a helmet as used with the wearable system. Sensor nodes provide information to a command node via wireless network telemetry or hardwired cables for the command node comprising a computer to effect processing and display.

### SUMMARY

The present invention is described by the independent claims with further details of specific embodiments described by the dependent claims. Disclosed herein are multiple inventive concepts that may be embodied in a wearable shooter localization system (WSLS). The WSLS includes one or more microphone arrays, and may include one or more processing units, and at least one output device. The microphone detector array is sensitive to the acoustic effects of gunfire and provides a set of electrical signals to the processing unit, which identifies the origin of the fire. The device may include orientation and/or motion detection sensors, which the processing unit may use to either initially compute a direction to the origin of a projectile in a frame of reference meaningful to a wearer of the WSLS or to subsequently update that direction as the wearer moves.

The microphone arrays may be constructed and positioned on the wearer in such a way as to enable gathering of data for an accurate determination of a bearing to the origin of a projectile regardless of the origin of the projectile or the direction that projectile is traveling relative to the wearer. In some embodiments, each microphone array has a plurality of microphones distributed over a domed substrate. The domed substrate may be sized and shaped to fit on the upper arm/shoulder area of the wearer. Such a shape and positioning of microphone arrays allows a sufficient number of microphones to receive signals representative of the acoustic effects of a projectile to make an accurate computation of the bearing. In such an embodiment, the bearing may accurately indicate the azimuth and range to the origin. Moreover, the substrate may be shaped such that a sufficient number of microphones receive the signals to accurately compute the elevation to the origin.

In some embodiments, a single microphone array may contain microphones positioned to provide sufficient data for a calculation of the origin of a projectile in many scenarios. Though, the feasibility of calculating the origin or the accuracy of that calculation may depend on the bearing to the origin relative to the microphone array. In some scenarios, a more accurate determination can be made using an alternative microphone array facing in a different direction or by combining data from one or more other microphone arrays. Accordingly, in some embodiments, multiple microphone arrays and associated processing units may be coupled, allowing the units to operate independently or collaboratively.

Each microphone array may be packaged as a subassembly resistant to penetration by shrapnel or, in some instances, projectiles. The sensor arrays may be worn in place of upper arm pads that may be worn as part of a protective body suit, reducing intrusiveness of the system on the wearer.

The system may include motion sensors to translate the bearing into coordinates immediately relevant to the wearer, even if the wearer moves and/or to compensate for any motion dependent effects in parameters used in computing an initial shooter location.

The bearing may be output in one or more modes. In some embodiments, the output may be provided to wearer through a user interface. The user interface, for example, may provide an audio signal to the user indicating the bearing to the origin of the fire. As another example, the user interface may provide the information on a display. The display may have a form factor suitable for wearing in a location that is easily visible to a wearer responding to a shot, such as on the wrist of the wearer.

In other embodiments, the system may be connected to a network to allow information obtained from a single wearer to be transmitted to a location where it can be used in coordinating a response by others to weapons fire. In other instances, information obtained from multiple wearers may be communicated over a network to a central location for coordination. For example, a networked configuration additionally provides unit leaders with situational awareness of hostile fire locations that can be used to coordinate retaliatory strikes.

To support a networked system, each WSLS may be configured to translate a bearing relative to a wearer to a position in a coordinate system meaningful to others within a theater of operation. For example, a bearing may be translated into a longitude, latitude and elevation. To support such a capability, each WSLS may include a GPS subsystem and/or a digital compass that can be used to ascertain the position and/or orientation of the system in such a coordinate system.

Accordingly, in some aspects, the invention relates to an architecture of a wearable shooter localization system. The system may include at least two microphone arrays shaped and positioned to provide 360 degrees of coverage. In some embodiments, the arrays are shaped and positioned to provide accurate elevation information instead of or in addition to azimuth and range information.

In some embodiments, the wearable shooter localization system may include sensors to provide orientation information for more accurately determining a bearing or for projecting a bearing, once determined, as the wearer moves after an initial bearing has been established.

In another aspect, microphone arrays and/or configuration of components in microphone array units may be shaped to achieve desired functionality. In some embodiments, the shape may provide non-planar sensors regardless of orientation of the wearer. In some embodiments, the shape may enable integration of the microphone arrays into protective gear or other clothing of the wearer in a fashion that does not unduly impede normal motion by the wearer.

In yet another aspect, control processes of the wearable shooter localization system may coordinate processing of data collected through separate microphone arrays and the system may determine a bearing based on data collected by microphones in either array or by microphones in both arrays. Data to be used in computing a bearing in any scenario may be selected dynamically to provide a more accurate determination of bearing or to compensate for missing or defective equipment or masking of some of the microphones based on the orientation of the body of the wearer.

In yet other aspects, data may be output from a wearable shooter localization system. The output may be provided to an individual wearing the system or to others, and the format of the output may vary, depending on the output mechanism.

Some aspects relate to a microphone array subassembly adapted for use in a wearable shooter localization system. The subassembly comprises a domed substrate comprising an outer shell comprising a concave surface and an inner shell conforming to the outer shell, the inner shell being attached to the outer shell. The subassembly further comprises a plurality of microphones mounted in the outer shell.

In some embodiments of the microphone array subassembly, the plurality of microphones comprises at least five microphones.

In some embodiments, the microphone array subassembly further comprises an electronic component between the inner shell and the outer shell. In some embodiments of the microphone array subassembly, the electronic component comprises a processor connected to receive outputs of the plurality of microphones. In some embodiments, the electronic component further comprises a memory storing computer-executable instructions that, when executed, perform a method of processing the outputs of the plurality of microphones to detect acoustic signals representative of a shot and to compute information indicating an origin of the shot. In some embodiments, the subassembly further comprises an orientation sensor coupled to the processor to provide orientation information about the subassembly, and the method of processing the outputs of the plurality of microphones to compute the information indicating the origin of the shot is further based on the orientation information.

In some embodiments of the microphone array subassembly, the domed substrate is shaped to conform to portions of an upper arm and a shoulder of a human.

Some aspects relate to a wearable shooter localization system comprising a plurality of microphone array subassemblies. Each microphone array subassembly comprises a domed substrate comprising a concave surface and a plurality of microphones mounted in the concave surface.

In some embodiments, the wearable shooter localization further comprises a processor embedded within the domed substrate of a microphone array subassembly of the plurality of subassemblies.

In some embodiments of the wearable shooter localization system, the domed substrate comprises an inner shell and an outer shell and the wearable shooter localization system further comprises a flexible circuit assembly disposed between the inner shell and the outer shell.

In some embodiments of the wearable shooter localization system, each of the plurality of microphone array subassemblies is operably connected to provide data to a fusion module. In some embodiments the fusion module is configured to select data from one or more of the microphone array subassemblies, and when the fusion module selects the data to be used from more than one of the microphone array subassemblies, the fusion module provided an output based on the selected data from the one or more microphone array subassemblies.

In some embodiments of the wearable shooter localization system, the plurality of microphone array subassemblies comprises first and second microphone array subassemblies, the first and second microphone array subassemblies each being shaped to conform to portions of an upper arm and a shoulder of a human.

In some embodiments of the wearable shooter localization system, the domed substrate of each of the plurality of microphone array subassemblies comprises an outer shell portion which is resistant to shrapnel.

Some aspects relate to a method of operating a wearable shooter localization system comprising a first microphone array and a second microphone array. The method comprises with a first processor associated with the first microphone array, computing first information indicating an origin of a shot based on outputs of microphones in the first microphone array; with a second processor associated with the second microphone array, computing second information indicating an origin of the shot based on outputs of microphones in the second microphone array; fusing the first information and the second information to form fused information indicating an origin of the shot; and presenting the fused information to a wearer of the wearable shooter localization system.

In some embodiments of the method, the fusing comprises computing a first confidence value for the first information, the first confidence value based at least in part on signal strengths detected by the microphones in the first microphone array; computing a second confidence value for the second information, the second confidence value based at least in part on signal strengths detected by the microphones in the second microphone array; and fusing the first information and the second information to form the fused information based on a relative value of the first confidence value and the second confidence value.

In some embodiments of the method, the fusing comprises computing a first confidence value for the first information based on a variation of the first information when the first information is computed using data collected during different time windows; computing a second confidence value for the second information based on a variation of the second information when the second information is computed using data collected during different time windows; and fusing the first information and the second information to form the fused information based on a relative value of the first confidence value and the second confidence value.

In some embodiments of the method, the fusing comprises defining a Bayesian network to determine the origin probabilistically from the first and second information.

In some embodiments of the method, presenting the fused information comprises presenting an azimuth, elevation and range to the origin with respect to the wearer of the wearable shooter localization system.

In some embodiments of the method, the fusing comprises determining a number of microphones in each array that detected a signal above a threshold, and selecting the first information as the fused information when the number of microphones in the first microphone array that detected a signal above the threshold exceed the number of microphones in the second microphone array that detected a signal above the threshold.

Some aspects relate to a wearable shooter localization system. The system includes a microphone array subassembly and a processor. The microphone array subassembly has an array of microphones, with each microphone in the array adapted to convert a detected portion of an acoustic signature of a shot into a respective electrical signal; and a motion sensor adapted to detect a change in orientation of the microphone array subassembly. The processor is for processing the electrical signals from the array during an interval to determine at least one property of the shot. The processing comprises calculations based on an output of the motion sensor during the interval to compensate for the change in orientation of the microphone array subassembly during the interval.

In some embodiments of the wearable shooter localization system, the motion sensor is a 3-axis gyroscope fixed with respect to the array of microphones.

In some embodiments of the wearable shooter localization system, the motion sensor comprises at least one accelerometer.

In some embodiments of the wearable shooter localization system, the wearable shooter localization system further comprises an output device for presenting the determined at least one property to a wearer of the shooter localization system.

In some embodiments of the wearable shooter localization system, the at least one property of the shot determined by the processor includes at least one of bearing and range to the origin of the shot determined with respect to a coordinate system relative to a wearer of the shooter localization system.

In some embodiments of the wearable shooter localization system, the at least one property of the shot determined by the processor includes at least one of bearing to the origin of the shot, range to the origin of the shot, shooter position, projectile trajectory, projectile caliber, and time of fire. In some embodiments, the processor is further configured to update the bearing to the origin of the shot based on subsequent movement of the wearer.

In some embodiments of the wearable shooter localization system, the motion sensor is adapted to detect the change in orientation of the microphone array subassembly without calibration in a field of deployment.

Some aspects relate to a method of operating a wearable shooter localization system having a microphone array assembly. The method comprises detecting an audible indication of a shot during an interval; measuring a change in orientation of the microphone array assembly during the interval; and processing the audible indication to determine at least one property indicating an origin of the shot. The processing comprises compensating for the change in orientation of the microphone array assembly during the interval.

In some embodiments of the method, detecting the audible indication of the shot is performed by a microphone array of the microphone array assembly, and measuring the change in orientation is performed by a 3-axis gyroscope of the microphone array assembly, wherein the gyroscope is fixed with respect to the microphone array.

In some embodiments of the method, the at least one property indicating the origin of the shot comprises an azimuth and range to the origin determined with respect to a coordinate system relative to a wearer of the shooter localization system. In some embodiments, the method further comprises processing the audible indication to determine at least one of projectile trajectory, projectile caliber, and time of fire. In some embodiments, the method further comprises updating the azimuth to the origin of the shot based on subsequent movement of the wearer.

In some embodiments of the method, detecting the audible indication of the shot is performed by a microphone array of the microphone array assembly, and measuring the change in orientation is performed by a 3-axis accelerometer of the detection module, wherein the accelerometer is fixed with respect to the microphone array.

Some aspects relate to a method of tracking shooter locations using a wearable shooter localization system. The method comprises acts of detecting a shot using an array of microphones worn by a user; determining a bearing to an origin of the shot relative to the user of the shooter localization system; and performing iterations of measuring relative motion of the user, updating the bearing to the origin of the shot relative to the user based on the relative motion of the user, and outputting an indication of the bearing.

In some embodiments of the method, each iteration measuring the relative motion of the user comprises measuring a relative orientation of the user using a 3-axis gyroscope.

In some embodiments of the method, measuring the relative motion of the user is performed by a sensor other than an earth magnetic field sensing device.

In some embodiments of the method, the act of determining further comprises determining a range to the origin of the shot relative to the user of the shooter localization system, and the act of updating in each iteration further comprises updating the range to the origin of the shot relative to the user based on the relative motion of the user.

In some embodiments of the method, the shot is a first shot; the method further comprises, while performing the iterations, detecting a second shot and determining a bearing to an origin of the second shot relative to the user; and after detecting the bearing to the origin of the second shot, each iteration further comprises updating the bearing to the origin of the second shot relative to the user based on the relative motion of the user, and outputting an indication of the bearing to the origin of the second shot.

In some embodiments of the method, measuring the relative motion of the user is performed by a motion sensor adapted to detect a change in orientation of the user without calibration in a field of deployment.

The foregoing summary provides an overview of some aspects of the invention and is not intended to limit the scope of the invention, as defined by the claims.

### BRIEF DESCRIPTION OF DRAWINGS

The invention and embodiments thereof will be better understood when the following detailed description is read in conjunction with the accompanying drawing figures. In the figures, elements are not necessarily drawn to scale. In general, like elements appearing in multiple figures are identified by a like reference designation. In the drawings:
FIG. 1 is a block diagram of a wearable shooter location system according to some embodiments; and
FIG. 2A is a photograph of a dual shoulder pad WSLS system as worn according to some embodiments;
FIG. 2B is a rendering of a shoulder pad WSLS according to some embodiments;
FIG. 3 is a flow chart of a method of operating a wearable shooter location system according to some embodiments;
FIGs. 4A-7D are a series of design drawing of a shoulder pad WSLS according to some embodiments;
FIGs. 8A-8B are a rendering of a portion of the shoulder pad WSLS according to some embodiments;
FIG. 9A is a block diagram of an audio user interface according to some embodiments;
FIGs. 9B-9C illustrate a display unit according to some embodiments;
FIG. 10-12 are block diagrams of a WSLS according to some embodiments;
FIG. 13 is a flow chart of a method of operating a wearable shooter location system according to some embodiments; and
FIGs. 14A-14B are field test measurements demonstrating operation of the shoulder pad WSLS according some embodiments.

### DETAILED DESCRIPTION

The inventors have recognized and appreciated the desirability of expanding the use of shooter localization system (SLS) to wearable systems for individual soldiers, law enforcement officers, security guards and others who may be placed in hostile situations. In the exemplary embodiments described herein, the wearer is an individual soldier. A wearable shooter localization system (WSLS) enhances the individual soldier's survivability and situational awareness on the battlefield. By providing an output directly to the wearer, the wearer can take action to avoid or neutralize a threat.

In some embodiments, the WSLS of one or more individual soldiers may be connected over a communication link to a command and control point. By providing shooter locations from the WSLS to a squad leader or other commander, the ability to manage a fight is enhanced, improving a combat unit's overall effectiveness.

Though shooter localization systems are known, the requirements of a wearable system present difficulties unique from ground vehicle and aircraft deployments. The human deployment platform places significant limitations on the shooter localization system's size and weight and introduces ergonomic difficulties. Further, a soldier's generally unconstrained mobility, both before and after a shot is fired, create added difficulties in providing accurate information about the location of the shooter. Systems, apparatus, and methods are provided to overcome these difficulties and are described herein.

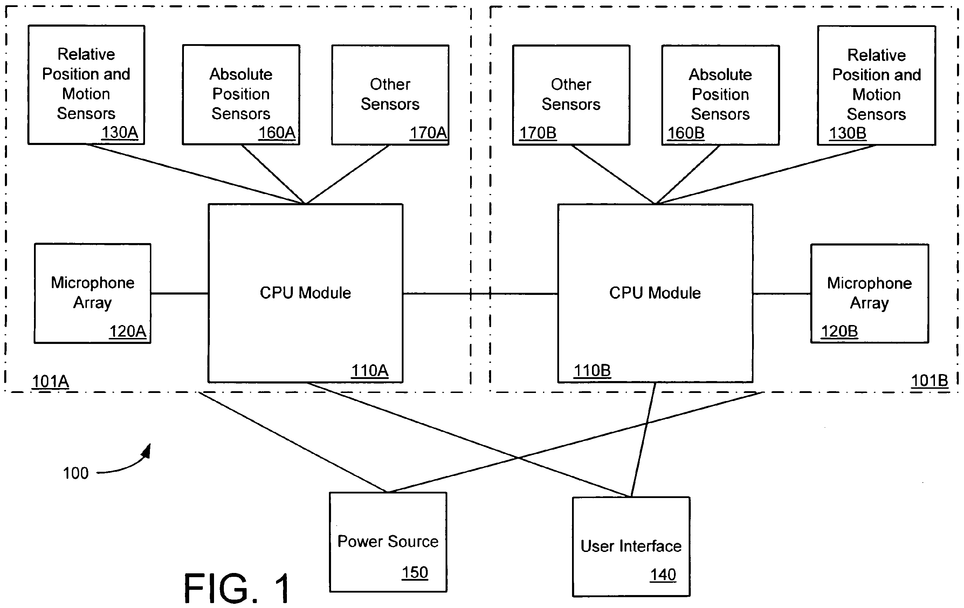

Initially, a description of the wearable shooter localization system (WSLS) architecture is provided. FIG. 1 shows a block diagram of a WSLS 100 according to some embodiments. In the embodiment illustrated, the shooter localization system comprises two microphone arrays 120A and 120B mounted on different portions of the wearer's body. Each microphone array is packaged as a unit 101A-B with components that can process the outputs of the microphones in the array and, when those microphones pick up acoustic signals associated with a projectile, compute a shooter detection solution including a bearing to the origin of the projectile.

Each unit 101 A-B is shown to have a CPU module 110A-B, a microphone array 120A-B, relative position and motion sensors 130A-B, absolute position sensors 160A-B, and other sensors 170A-B. Some components of the WSLS may be shared by both units 101A-B in some embodiments. Though each unit 101A-B could have a user interface 140, and a power source 150 for full redundancy, in the embodiment illustrated, each unit receives power from the same source and provides output through the same user interface.

In the embodiment illustrated, the units 101 A and 101B have the same construction. Though, in operation, the units may interact such that, despite their similar construction, different units perform different functions at different times. Of course, it is not a requirement that each unit be the same and other configurations are possible. For example, one unit could contain only a microphone array and a communication link to the other unit, where all processing of microphone data is performed. Nonetheless, in the embodiment illustrated, all units are capable of performing the same functions and the units are described generally by reference to unit 101A.

The CPU module 110A is the central processor of the WSLS unit 101A. The CPU module 110A monitors the microphone array 120A to detect a characteristic of the signal indicating that a shot has been fired. The data output from the microphone array is buffered and when the CPU module detects that a shot has been fired, computer-executable instructions execute an algorithm on the buffered data to identify the position of the shooter and possibly other related information. Once the position is calculated, the CPU module outputs an indication of the shooter position. In the embodiment illustrated, the output is provided to the soldier wearing the WSLS via the user interface 140. In some embodiments, an audible indication of the location may be synthesized and produced by an ear bud speaker the soldier is wearing. In some embodiments, a visual display may be provided.

The position of the shooter may be provided to the user in any suitable coordinate system. For example, the location may be provided in a relative coordinate system (e,g., range, azimuth, elevation) or an absolute coordinate system (e.g., latitude, longitude, elevation). In addition to using sampled outputs of the microphone assemblies, these calculations may include as input information about the orientation of the microphone arrays. Such data may be provided by relative position and motion sensors 130A may be used to determine the orientation of the microphone array at the time of the shot. For example, the relative position and motion sensors may reveal that the wearer has moved into a position that one array is more horizontal than vertical at the time of the shot. This information may be used to translate a computed projectile trajectory relative to the microphone array to a trajectory relative to the wearer.

In embodiments in which the shooter location is output in terms of a bearing to the shooter location, the system may update that bearing to reflect movement of the wearer after the shot was detected. The relative position and motion sensors 130A may provide data to perform dead reckoning to deduce the present location of the soldier relative to the soldier's location at the detection of the shot. Suitable sensors such as 3-axis accelerometers and 3-axis gyroscopes may be used. When providing a relative location to the soldier, the CPU module 110A may compensate for the soldiers movements to allow the soldier's present location to be used as the reference point, rather than the soldiers location at the time of detection of the shot.

In contrast to a compass or other sensor that produces an output that may depend on conditions of use, a gyroscope and an accelerometer outputs signals that may be used to measure changes in orientation without calibration. For example, it is known that a compass, which nominally outputs a signal indicating direction, behaves differently based on where in the world it is located. Outputs of a compass may also depend on its surroundings. Accordingly, a compass may be "boxed" or calibrated for a particular location before use. However, in some embodiments, a WSLS may employ motion sensors, such as gyroscopes or one or more accelerometers that can be used without performing a calibration process in the field of deployment.

In addition, motion sensors may be used to adjust for any changes as a result of motion while data is being collected for a shot location computation. For example, the range portion of a computed bearing may be sensitive to the rate of rotation of the microphone arrays as data is being collected. In this scenario, data from relative position and motion sensors 130A, and any other sensors providing data used in computing initial shooter location, may be captured as microphone outputs are captured. The captured motion data may then be used to make adjustments for any motion dependencies in the computation of initial shooter location.

As is known in the art, range may be computed once the trajectory of a projectile is determined. A shock wave from the projectile as it passes the wearer may be detected based on microphone outputs. From these outputs, the angle of arrival of the shockwave can be computed. Additionally, the sound wave from a muzzle blast that launched the projectile may be detected with the microphones, and the angle of arrival of the sound wave can be computed. The difference in these angles, in combination with computed trajectory, can be used to compute the range to the shooter.

In a WSLS, values measured for these angles depend on the orientation of the microphone array relative to the origin of a shot, which, depending on movement of the wearer, can change between the time that a shock wave from a projectile and a muzzle blast are detected. An adjustment can be made for this motion by recording sensor outputs while outputs of the microphones are being collected. For example, a relative angle of arrival may be computed for a shock wave detected at a first time. A relative angle of arrival may be computed for a sound wave detected at a second time. These angles of arrival may be related to each other by offsetting by the angular motion of the sensor array between the first time and the second time.

In some embodiments, the unit 101A includes absolute position sensors 160A. These sensors may be used to translate measurements from a coordinate system relevant to the wearer into a fixed coordinate system. For example, the absolute position sensors 160A may include a GPS receiver and magnetometer to determine the position and heading of the wearer. This information may be used to translate relative position and orientation information into a coordinate system meaningful to others within a theater of operation. For example, a bearing may be translated into a longitude, latitude and elevation.

A WSLS is preferably of sufficiently small size and weight and mounted in a suitable location on the body of the wearer so as to be unobtrusive to the task of soldiering. Additionally, when microphones are mounted on a moving soldier, at some times portions of the soldier's body will be positioned between one or more of the microphones and the acoustic perturbations caused by a projectile. Accordingly, the microphone arrays must be positioned such that sufficient data is collected to compute the origin of a projectile, even if acoustic perturbations are masked from one or more of the microphones. In a preferred embodiment the WSLS is comfortable to the wearer and readily provides information in a format easily interpreted by a soldier under fire.

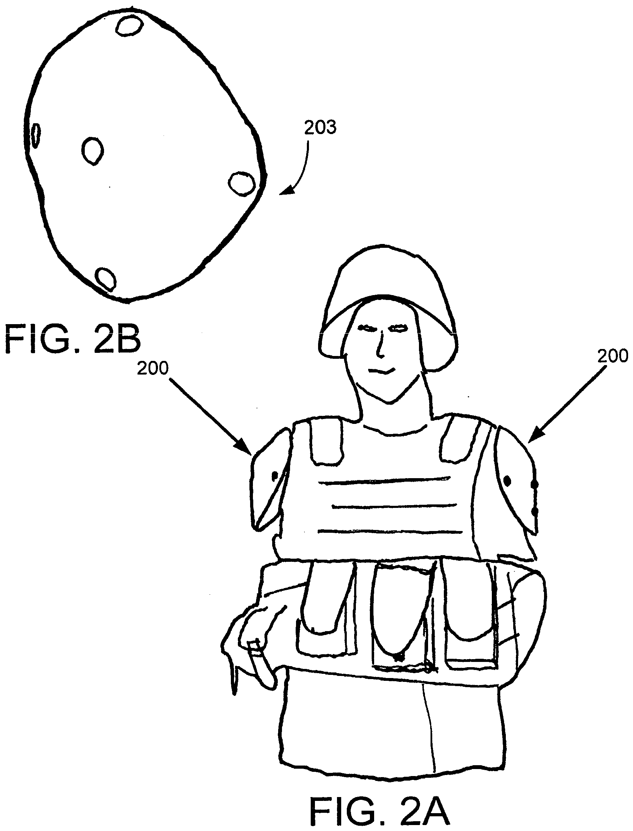

The WSLS may be housed in any suitable housing or shell. FIG. 2A is a photograph of a WSLS 100 according to some embodiments. In the illustrated embodiment, the WSLS is in the form of a "shoulder pad" which is worn on the upper arm of the soldier, near the shoulder. FIG. 2A illustrates the size of the pads relative to a human. Each pad has a size of approximately 10 cubic inches and weighs under a pound.

Two shoulder pad systems 200A and 200B are shown. The two shoulder pads may provide location estimates of the source of fire independently, or the estimates may be combined to improve overall accuracy and confidence. The shoulder pad may be part of a protective vest such as the Future Force Warrior (FFW) vest or Interceptor Outer Tactical Vest (IOTV). A detailed rendering 203 of a shoulder pad WSLS is shown in FIG. 2B.

Wearable shooter location systems may be worn on other areas of the body as an alternative or in addition to the shoulder pads systems 200A-B depicted in FIG. 2A. For example, a wearable SLS may be mounted on or integrated into a helmet or other portions of a soldier's body armor or battledress. In the example embodiments described herein, the dual shoulder pad WSLS is described.

Because the soldier and/or the soldier's equipment may obstruct the shock waves or muzzle blast, multiple, independent WSLSs may be used to provide at least one accurate measurement for a shot fired from any direction. In the example embodiment, two shoulder pad WSLSs are operated independently to obtain a localized shooter detection solution. Optionally, when both WSLSs report a shooter location, additional processing may be performed to combine the results or to select a single shooter detection solution to report. For example, a confidence value may be computed for each solution, based on the signal strength and timing detected by the microphones in each array or the number of microphones in each array that detect a signal above a threshold. Alternatively, the confidence may be computed based on the variation in the solution when computed using data collected during different time windows. Regardless of the specific mechanism used to compute a confidence, the solution obtained with the highest degree of confidence may be reported through the user interface.

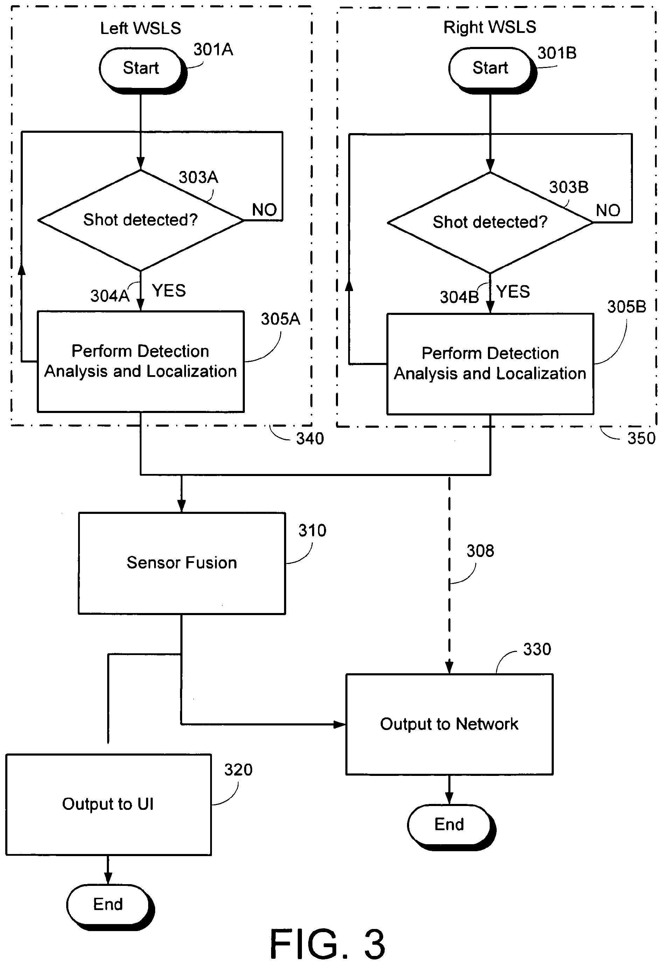

FIG. 3 provides a flow diagram of the operation of a WSLS 100 having two shoulder pad systems 200A-B according to some embodiments. Boxes 340 and 350 indicate steps associated with the microphone array 120A, integrated into the left shoulder pad 200A, and the microphone array 120B integrated into the right shoulder pad 200B. These steps may be performed by CPU modules 1 l0A-B, which may also be integrated into the respective shoulder pads 200A-B.

In the embodiment illustrated, one of shoulder pads 200A-B is designated as a primary device, and the other a secondary device. The primary device may be designated in advance and remain fixed over the operation of the system. For example, the primary device may be designated by configuring the device to provide user output. Alternatively, a primary device may be designated dynamically and which unit acts as the primary device may change as the system operates. For example, the first device to detect a shot or the device coupled to microphones that have the largest signal output as a shot is detected may act as the primary device. In such an embodiment, the designated primary device may change as the device operates, in this case, potentially for each detected shot. Though, it is not necessary that either device be "primary." Some or all of the processing ascribed to the primary device could be performed in a processor independent of the microphone units.

Regardless of how the primary device is determined, steps, 310, 320 and 330, may be performed by the primary devices CPU module. In contrast, steps within blocks 340 and 350 may be performed by CPU modules within units 101A and 101B, respectively, or other microphone array units.

At startup (steps 301 A-B), each unit 101A and 101B begins monitoring its respective microphone arrays for an audible indication of a fired projectile (steps 303A-B). Upon shot detection (path 304A-B), the microphone data is processed to obtain localized shooter detection solutions. The shooter detection solutions may include information such as shooter position, projectile trajectory, projectile caliber, time of fire, and the like.

In the illustrated embodiment, these values may be computed using techniques as are described in U.S. Patents 7,126,877; 7,190,633; 7,292,501; 7,359,285; 7,372,772; and 7,408,840. However, any suitable approach may be used for computation at steps 305A and 305B.

While steps in boxes 340 and 350 have been described simultaneously, it should be appreciated that each system may operate independently. Thus, the individual systems need not be performing the same steps simultaneously. For example, one shoulder pad unit may be occluded from the fire and not detect a shot for which the other system is able to process and determine a solution.

After a shooter detection solution is obtained by at least one of the wearable systems, it may be provided for sensor fusion such that a solution taking advantage of data collected by multiple units, each with a microphone array, may be found. Sensor fusion (step 310), may be performed by the designated primary CPU module or any other suitable device. The units may interact in any suitable way such that data can be shared to perform sensor fusion. The processor designated to perform sensor fusion may respond to reports from the other units or, when it has data from itself or one or more other units, may poll the remaining units for information.

Units may provide information in any suitable form. In the embodiment illustrated, in which each unit has a CPU module programmed to compute a shooter localization solution, each unit may provide information in terms of a computed solution or other computed parameters. Though, other embodiments are possible. For example, each unit may provide information in the form of raw sensor outputs.

Typically individual solutions take only fractions of a second to calculate and a short delay is imperceptible to the user.

If multiple solutions are available, system noise, obstructions, and other factors are likely to lead to differences in solutions from each system. In step 310, these differences are resolved by the sensor fusion processor in any suitable way to achieve a single output solution. For example, in some embodiments, the first reported result may be reported irrespective of the other solutions. In another embodiment, a confidence value is associated with each shooter detection solution and the detection solution with the highest confidence is selected. In yet some other embodiments, other suitable sensor fusion algorithms may be used to advantageously combine multiple solutions (e.g., a Bayesian network may be defined or an algorithm executing based on the Dempster-Shafer theory to identify the most probable solution).

Regardless of how the data is fused, in step 320, the shooter detection solution is provided to the soldier through a user interface (UI). In some embodiments, the detection solution may be provided through the user interface as an audible signal. In other embodiments the solution may be provided through a visual display. In yet other embodiments, the solution may be provided in accordance with settings by the system user or may be formatted in response to inputs calling for data of a specific form.

In step 330, the fused shooter detection solution alternatively or additionally may be transmitted over a tactical network to provide situational awareness to other personnel. For example, the information may be transmitted to the soldier's squad mates, squad leader, or a battlefield commander. Alternatively, in step 330, the individual shooter detection solutions may be output to the network prior to sensor fusion (path 308). In accordance with some embodiments, such communications can be integrated with a tactical system such as the Ground Soldier System (GSS) and leverage existing computing hardware on the soldiers and leaders such as the Land Warrior (LW) hardware suite.

It should be appreciated that while two independent units, corresponding to the left and right shoulder pads systems, were described with reference to FIG. 3, the WSLS may consist of any suitable number of units. The sensor fusion processing performed in step 310 may consider any number of shooter detection solutions. For example a third WSLS unit may be integrated into the soldier's helmet.

Positioning microphone units on the upper arm or shoulders of the wearer provides a suitable location. Units of similar shape may be mounted on each arm of the wearer and will face generally in opposite directions, providing a relatively wide angular coverage. In addition, a substrate conforming to the upper arms of a wearer will have a domed shaped, providing suitable mounting locations for microphones in an array such that microphones of the array can be mounted such that at each microphone will be separated from at least one other in each of the three dimensions. Such an orientation aids in collecting data needed for a more accurate shooter localization solution, particularly if elevation is included as part of the solution.

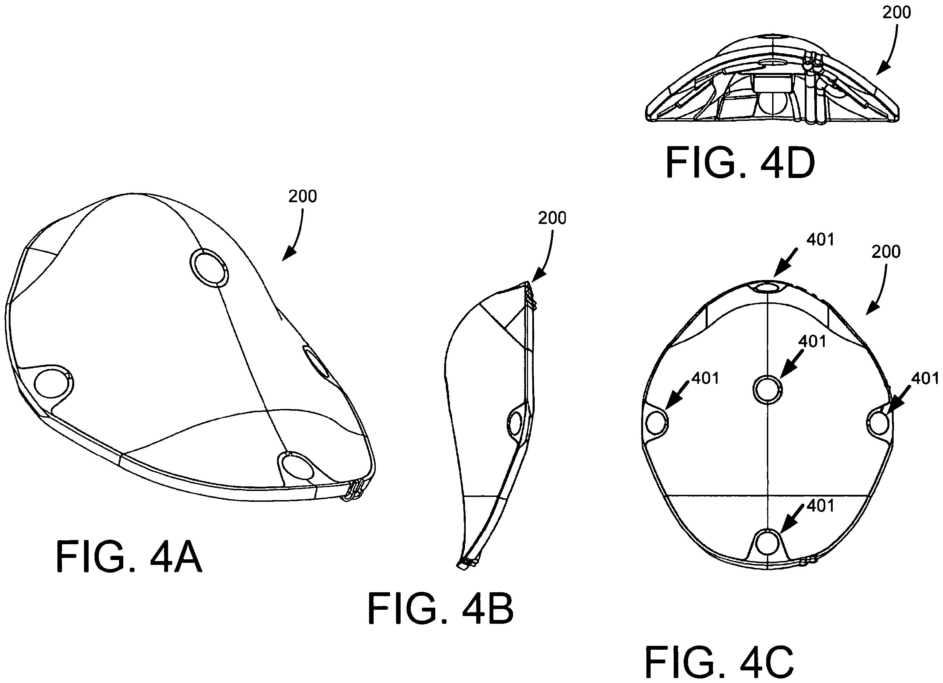

FIGs. 4A-7D provide a series of design drawing for an embodiment in which each unit is mounted on the upper arms, such as for shoulder pad WSLS 200. FIG. 4A provides a perspective view of an assembled shoulder pad WSLS 200. Alternate views of the shoulder pad WSLS 200 are shown in FIG. 4B (side), FIG. 4C (front), and FIG. 4D (top). Note that in FIG. 4D, an interior shield portion is removed. As shown, the shoulder pad has a substrate shaped to extend along the wearer's arm and also to wrap partially around the arm. The shoulder pad has a dome shaped shell which serves as a substrate for the microphone array and other electronic components of the WSLS.

As can be seen in the illustrated embodiment, microphones 401 (labeled in FIG. 4C) are distributed across the surface of this substrate so that a relatively wide angular coverage, in both azimuth and elevation, is achieved. In the embodiment illustrated, when the wearer's arm is at rest, at the wearer's side, at least one microphone faces at least partially forward while another faces generally in the opposite direction. As illustrated, this may be achieved by positioning the microphones substantially along the perimeter of the substrate and with one microphone positioned near the center. Also, because the substrate is curved, the microphones are distributed in multiple planes (e.g., at three different heights relative to portion that is intended to be worn on the lowest portion of the upper arm).

In a preferred embodiment, a desensitized microphone element is packaged in a flat case that is sealed against water and other environmental factors. Microphones are preferrably ruggedized to avoid damage and enable operation in wet or other inclement weather and other field conditions. Each microphone in the array is preferably flush mounted in the shell and protected from physical damage. It should be appreciated that any suitable number and positioning of microphones in the microphone array may be used.

In some embodiments, the underside of the shoulder pad which contacts the wearer provides a smooth, ergonomic surface to provide minimal distraction and encumbrance to the soldier.

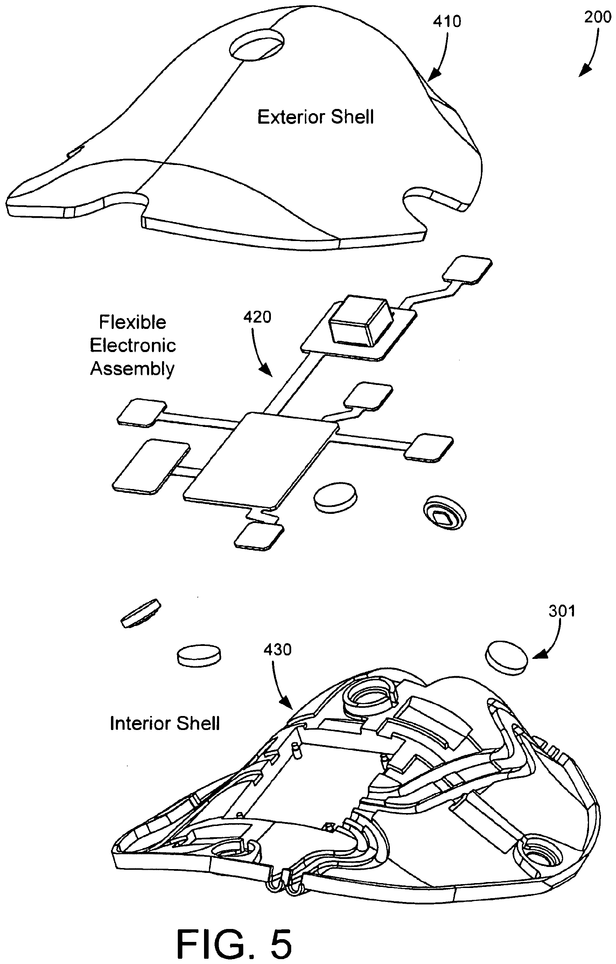

FIG. 5 is an exploded view design drawing of the shoulder pad WSLS unit 200 according to some embodiments. The shoulder pad WSLS unit 200 includes an exterior shell 410, an interior shell 430, and a flexible electronic assembly 420.

The exterior shell 410 and interior shell 430 provide a rigid structure for protecting the flexible electronic assembly 420. In some embodiments, the exterior shell 410 and interior shell 430 are joined to form a seal to protect the interior electronics from water, dust or other environmental conditions. The seal may be formed through the use of a gasket (not shown) or other material to provide a tight fit between the shells when assembled. Though, other sealing techniques are possible. For example, the shells may be welded, fused or joined with an adhesive.

Regardless of how the seal is formed, the seal may accommodate wires (not shown) coupling the electronics within the shell to other components of the system outside of the sealed unit. For example, a wire may couple the electronics within the unit to a display or an earpiece so that audio and/or visual output may be provided to a user. Similarly, a wire may couple the unit to another unit so that data from multiple sensors may be fused. Likewise, a wire may pass into the unit to carry power to the electronics. Such wires may pass through openings in the shell of the unit that are then sealed to maintain environmental protection of the components in the unit. Though, in some embodiments, communication between components of the system may be wireless, which would reduce the number of wires required. As one example, the devices may be configured with wireless transmitter/receivers to implement a Personal Area Network according to the Bluetooth or other suitable standard.

The shells may be formed out of any suitable material using any suitable manufacturing process. In some embodiments the exterior shell and/or the interior shell are made of small arms protective insert (SAPI) plates. In such an embodiment, the electronic components may be imbedded in a thin-layer pad material also used in SAPI plate manufacturing. Preferably, lightweight materials that provide protection from small arms fire, shrapnel, and/or flak are used for the shell 410 (e.g., Kevlar). In some embodiments, where a ballistic shell may not be required, any materials which provide sufficient structure to support the microphone array and enclosed electronics may be used. Conversely, in embodiments in which greater protection is desired, exterior shell 410 may be made of material to provide the wearer with additional protection, such as ceramic or composite plates.

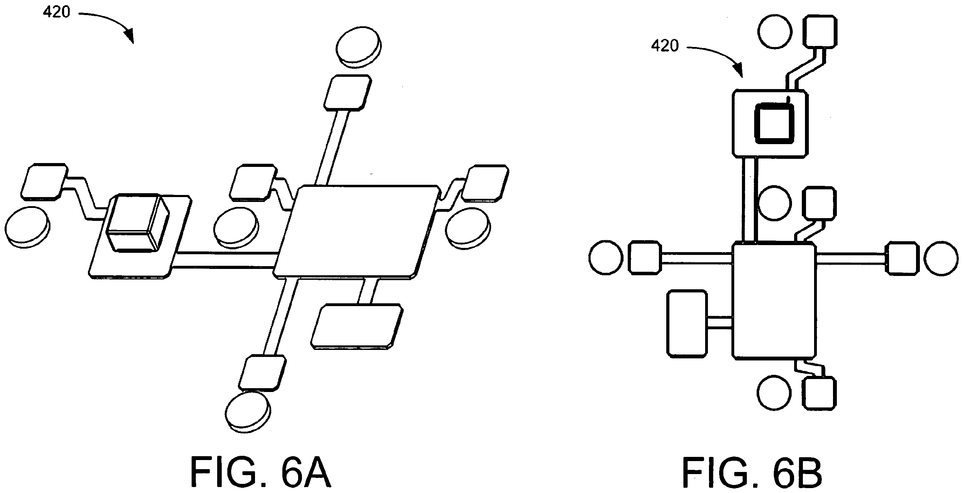

FIGs. 6A-6B illustrate a flexible electronic assembly 420. The flexible circuit assembly 420 may have suitable sockets, connectors, and solder points for assembling the system electronics. The assembly may provide suitable traces, busses, and the like for providing signals and power between the components. The flexible circuit assembly 420 may conform to the exterior shell 410 and interior shell 430. In some embodiments, the flexible circuit assembly 420 may be sufficiently flexible to conform to different sizes of shoulder pads or to other WSLS designs (e.g., a helmet based WSLS). Though, in the embodiment illustrated, each unit includes separate microphone components with associated amplifiers, a CPU with memory component and position and motion sensor component. Even if the flex circuit illustrated in FIG. 6A-6B cannot be repositioned to conform to a desired form factor, a different flex circuit can be constructed to connect these components in different positions to conform to an alternative form factor.

In this way the flexible electronic assembly provides a modular architecture for low cost reconfiguration to an alternative design.

In some embodiments, the interconnections between components may be implemented using technology sometimes called "rigid flex." Such flex circuits may have a shape that is defined at the time of manufacture, but may otherwise include in an integrated package conductive members to carry signals and power and, in some instances, to provide shielding, a controlled impedance or other desired electrical properties for signal conductors. If rigid flex is used, the interconnection assembly may be shaped for use with a specific substrate.

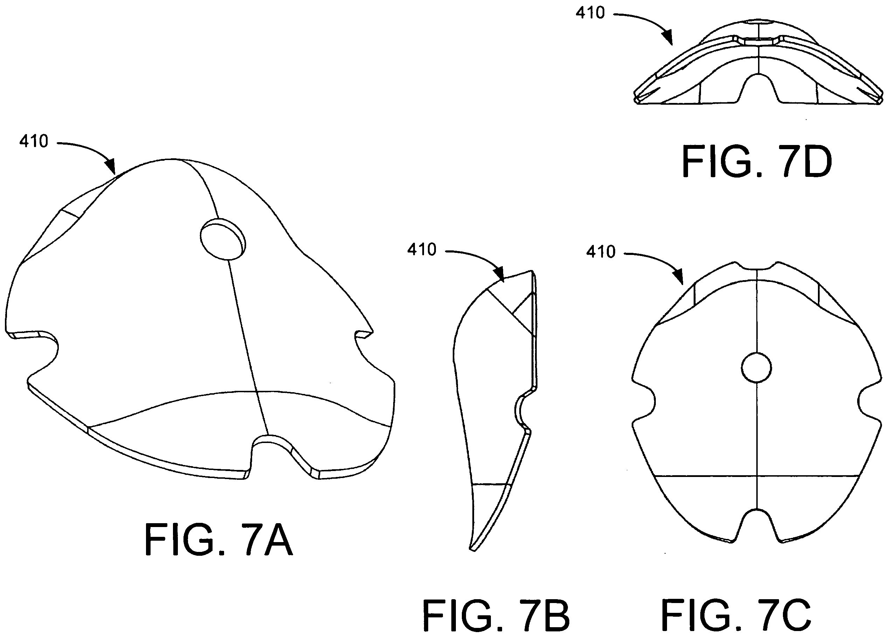

FIGs. 7A-7D are design drawings of several views of the exterior shell 410.

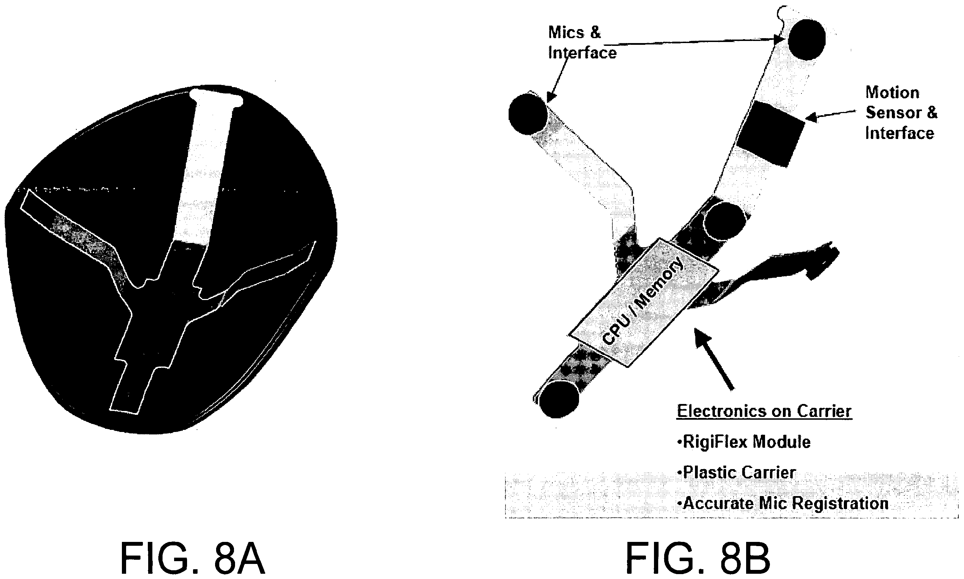

FIGs. 8A-8B provide additional views illustrating the layout of the interior of the shoulder pad according to some embodiments. The interior shell 430 is not shown in these renderings. An electronics carrier structure 800 may be used in some embodiments to support the electronic components within the shell. Optionally the flexible circuit assembly 420 (not shown) may be attached to the carrier structure 800.

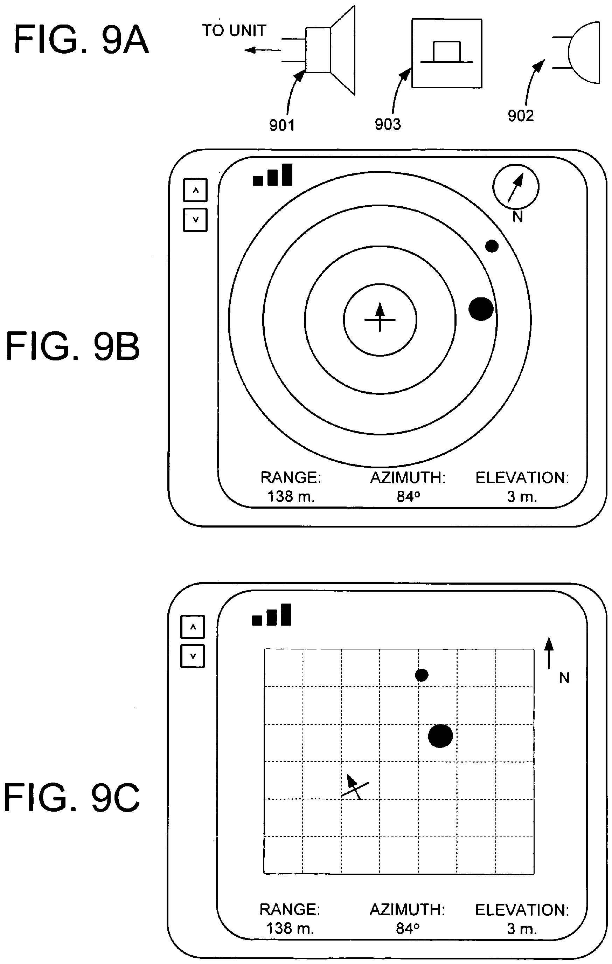

Turning now to FIGs. 9A-9C, various aspects of the user interface (UI) of the wearable SLS are described. The UI may include a speaker, visual display, input buttons, and any other suitable human interface technology.

As shown in FIG. 9A, a speaker 901 may be coupled to a component that provide audio information for output to a wearer. In some embodiments the speaker is operably connected to the CPU module which controls an audio signal output to the speaker. In some embodiments the speaker 901 is connected to the WSLS system via a suitable I/O port, such as a mini-plug or wireless interface (not shown). For example, the speaker 901 may be connected via a wire passing through the domed shell for connection to the CPU module in a unit 101 A.

Though, the specific path by which information is coupled to the audio output unit is not critical to the invention. In some embodiments a suitable port for connection of a speaker is integrated into a display module. A suitable port on any other module associated with the WSLS also may be used to make a connection to a speaker. Alternatively, in some embodiments, the speaker includes a suitable wireless module for wirelessly connecting to the CPU module using an appropriate wireless protocol, such as Bluetooth. The speaker 901 may be of any suitable type including an ear bud or headphone speaker.

In some embodiments, the speaker 901 is a shared use speaker which may additionally be used for radio communications or other purposes. An audio processor component of the CPU module may synthesize speech indicating the shooter detection solution and provide it for reproduction by the speaker. In some embodiments, a voice command (via microphone 902) and/or button 903 may be provided to cause the WSLS to provide an audio report of the shooter detection solution. In some embodiments, a request for output may also trigger an update of the shooter location information. Such a report may be based on the previously determined location of the shooter, but the output bearing from the wearer to the shooter location may be update in response to a request based on movement of the wearer since the shooter location was determined

Alternatively or additionally, a visual display may be worn by the soldier to receive shooter location information. The visual display may be configured to be worn at a suitable location on the wearer's body. The display may be part of a handheld computer, such as a personal digital assistant (PDA) or similar technology, and may be attached to the soldier at a position easily visible or accessed. However, in other embodiments the visual display is adapted to be worn on the soldier's forearm, near the soldier's wrist. Such a display may be formed using known LED or LCD technology as is available in connection with portable electronic devices. Other embodiments, such as integration into a heads up display (HUD), are also envisioned.

The display may provide shooter detection solutions in any suitable format. FIGs. 9B-9C illustrates an example of the display that may appear on a device, about 2 inches by 3 inches in size, strapped to a wearer's forearm. In some embodiments, a suitable map may be provided on the display illustrating the soldier's location and the shooter positions. The shooter's elevation may be illustrated by text (e.g., displayed near the shooters locations), by the color or the shape used to indicate the shooter position, or in any other suitable way. Additional information, determined by the detection algorithm, such as the trajectory of the projectile, caliber of the projectile, and accuracy of the measurement may also be displayed.

In some embodiments, a time stamp associated with the shooter position may affect how a shooter position is displayed. For example, if multiple shots are fired over a period of time, it may be desirable to easily distinguish the most recent shooter positions on the display. Any suitable techniques may be used to convey this information. For example, only the position associated with the most recently detected shot may be indicated on the display. In other embodiments, once a shooter location is identified, it may persist on the display for some period of time, until replaced by other data or until cleared by the user, such that multiple locations may be indicated simultaneously. In such embodiments, when a shooter detection solution is found, the display may provide a visually distinctive indicator, such as a bright rapidly flashing indicator, of the most recent shooter position. As time passes the visual indication may change to indicate the time since the location was determined. For example, the flashing may be stop or reduced in rate and/or the intensity of the indicator may be reduced. In scenarios where multiple shots are fired over time, older indicators may be gradually reduced in intensity and optionally completely removed from the display to avoid overcrowding which may confuse the soldier and obfuscate the most relevant information.

The shooter location may be displayed in any suitable format. For example the location may be displayed as a bearing relative to the wearer. Such an output is illustrated in FIG. 9B, which could be the only mode of operation of the display or one of multiple modes of operating the display. FIG. 9B provides an example embodiment of a display using a soldier fixed coordinate system. The center of the display represents the soldier's position. The soldier's facing, which may be determined by the CPU based data from position sensors on one or more microphone units and data from a similar sensor unit on the display, defines the 0 degree azimuth angle with azimuth (i.e., relative bearing) increasing clockwise around the soldier. A shooter positions is displayed by a dot or other icon at the corresponding range and azimuth relative to the origin. Shooter positions may be regularly updated on the display to reflect any change in position of the soldier.

In the example display 910, two shooter positions are shown. A larger marker is used to indicate the more recent detection.

In another mode (not illustrated), the display illustrates shooter positions from a soldier fixed coordinate system with the azimuth angle fixed to an absolute coordinate (e.g., magnetic north).

In yet a further embodiment, less information may be provided on the display. In scenarios in which range information is not required, the location may be provided as simply an arrow or other indication of the azimuth to the shooter location.

In yet another mode, illustrated in FIG. 9C, the display illustrates the soldier and shooter positions in a fixed coordinate system, such as longitude and latitude. The soldier's position in the fixed coordinate system may be determined by the GPS receiver and the shooter positions may be converted from the relative coordinate system to the fixed coordinate system for display. In this embodiment, the wearer position as well as the shooter position may be indicated in the display.

Regardless of whether shooter location data is displayed in a fixed or relative coordinate system, the display may be configured to include a map or other textual or graphical information about the surroundings of the wearer.

The display may be configured to operate in one or more of the modes described above or any other suitable mode. The mode used to display information at any time may be selected based on input from the soldier wearing the device. For example, the device may be equipped with buttons to receive inputs. For example, some inputs may indicate that location information is to be provided in a coordinate systems relative to the position and optionally facing, of the soldier, and some other inputs may indicate that location information is to be provided in an absolute coordinate system.

In some embodiments, a database of shooter positions and related information is maintained. The display may provide detailed information about one or more shooter detection solutions. The user interface may provide buttons for the soldier to scroll through and highlight entries in the database. The mapped area may emphasize a highlighted item. The database may be configured to be organized by time stamp, caliber, range, to assist the soldier in reviewing shot detection events.

In some embodiments, the WSLS may suppress the display and reporting of shots fired under certain criteria. For example, in some embodiments, the WSLS detects the caliber of the fired projectile. Reports of friendly fire of a known caliber may be suppressed. Alternatively, friendly fire may be distinctively indicated on the display by, color, shape, intensity, and the like. Similarly, shooter detection solutions may be suppressed based on the determined trajectory and position.

Alternatively or additional other types of information may be included on the display. For example, in some embodiments, the display may include status information about the WSLS, such as the remaining power.

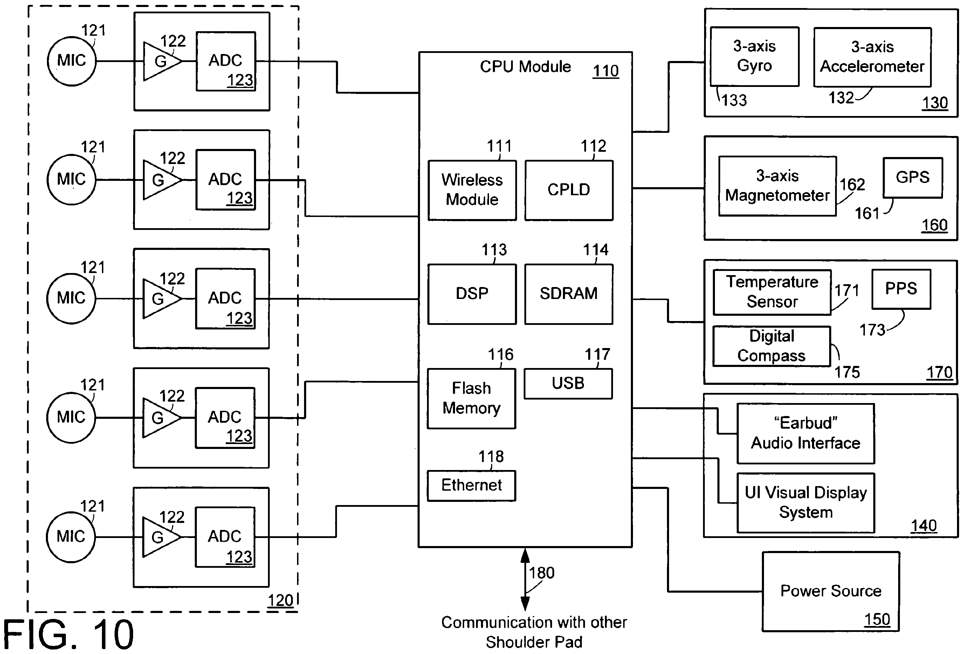

Turning now to FIG. 10, a detailed block diagram of the electronics hardware for the shoulder pad WSLS 200 is shown. In a preferred embodiment, each of the CPU modules 110, microphone array 120, relative position and motion sensors 130, absolute position sensors 160, and other sensors 170 are integrated into the dome shaped shell illustrated in FIGs. 4A-4D.

The microphone array 120 contains a set of five microphones 121 and associated amplifiers 122, and analog-to-digital converters 123 (ADCs) to provide the acoustic data to the CPU module 110. Commercially available microphones may be used. Though, in some embodiments, such microphones may be packaged to limit their response to high acoustic pressures, such as may be encountered when a shot occurs, to provide accurate electrical information and to avoid damage to the microphone. The invention is not limited by the type of microphone used, and any suitable microphone may be used. In a preferred embodiment, a desensitized microphone element packaged in a flat, waterproof case is used. However, other suitable microphone technologies may be used in other embodiments. These technologies include, for example, electret, piezoelectric or MicroElectrical-Mechanical System (MEMS) microphones. In some embodiments, the amplifier and ADC is integrated into the microphone package and signal and power wires are connected to the CPU module 110 and suitable power source 150, respectively.

The CPU module 110 implements the SLS algorithm to achieve the shooter detection solution. The algorithm for determining shooter position and related information may be implemented by the CPU module 110 in software, hardware, or any suitable combination thereof. In some embodiments, the CPU module includes a digital signal processor 113 (DSP) chip hosting firmware implementing the appropriate algorithms. The processor may be augmented by a complex programmable logic device 112 (CPLD), synchronous dynamic random access memory 114 (SDRAM), flash memory 116, and other peripheral memory, to implement the algorithm and provide suitable outputs to the user. In some embodiments, an Analog Devices Blackfin DSP may be used (e.g., Blackfin 527).

In addition to the communicating with the microphone array 120, the CPU module 110 may receive additional information from the sensors 130, 160 and 170. The CPU module 110 may also control the user interface 140. In some embodiments, the CPU module hardware is integrated into the shell structure illustrated in FIG. 4A. In some other embodiments, the CPU module may be part of a handheld computing device, PDA or similar technology, and may be stored in a pocket, pouch or any other suitable location. In some embodiments, the CPU module and display unit are housed within a single housing (e.g., a PDA) which may be positioned with easy reach and/or view of the soldier. The CPU module may implement power management features to minimize overall system power consumption.

In some embodiments, a flash memory or other nonvolatile memory is connected through a USB to the DSP; however, any suitable interface may be used. The flash memory may be used to log data collected during operation or for any other purpose.

In some embodiments, the CPU module includes suitable audio processors to synthesize a voice for reporting shooter positions and the like to the soldier via an ear bud speaker. Optionally, the flash memory may contain a sound library for reconstruction into an appropriate audio message.

The CPU module 110 may optionally include one or more wireless communications modules 111. In some embodiments, a wireless communication module may be used to communicate with one or more user interface devices. Optionally data communication link 180 between the two shoulder pad units may be facilitated by the wireless module. In some embodiments, the same or a different wireless communications module may be used to communicate shooter detection solutions and other information to other members of a unit or a squad leader, and/or to command personnel. Any suitable wireless technology may be used (e.g., IEEE 802.11). In some embodiments, the WSLS is integrated with a tactical system such as the Ground Soldier System (GSS) and data is reported by the wireless communications module to a situational awareness system. According to some embodiments, shooter detection solutions are reported by first forming a local grid coordinate system of hostile fire. The shooter location is then transmitted in a suitable format for display by the situational awareness system. For example, the Joint Variable Message Format (JVMF), the Cursor on Target (CoT) format, any of several other commercial or military standards or vendor proprietary formats may be used. The shooter locations may be communicated over a military tactical network for display on a situational awareness system such as Force XXI Battle Command Brigade and Below (FBCB2), FalconView, or equivalent.

The relative position and motion sensors 130 may include a 3-axis accelerometer 132 and a 3-axis gyroscope 133. Though, any other suitable sensors may be included. The 3-axis accelerometer 132 may provide orientation information about the microphone unit to the CPU module 110. The 3-axis gyroscope 133 may provide motion information about the microphone unit to the CPU module 110. Because the microphone units are on a substrate that is movable relative to the ground, which is the coordinate system meaningful to the wearer, the relative position and motion sensors 130 provide information that allows any projectile trajectory, measured relative to the microphone array, to be translated into a trajectory relative to the frame of reference of the wearer.

The absolute position sensors 160 may include a Global Positioning System (GPS) antenna and receiver 161 and a 3-axis magnetometer 162. Though, any other suitable sensors may be included. The GPS receiver 161 may provide absolute position in earth coordinates to the CPU module 110. The GPS receiver 161 may further provide the local magnetic declination information to the CPU module 110. The 3-axis magnetometer 162 may provide heading information relative to magnetic North to the CPU module 110. The CPU module 110 may combine the absolute position sensors 160 with the relative position and motion sensors 130 to compute absolute position of the microphone unit and origin of the projectile. A networked configuration has a similar requirement in order to generate a shooter position that can be transmitted via the tactical network.

The relative position and motion sensors 130 may be used to determine the movement of the soldier and may include a 3-axis gyroscope 133. This information may be used to determine the movement of the shoulder pad during the shot, and the movement of the soldier after a shot detection. The movement of the soldier after the shot may be used to compensate for the soldier's movement from the location at which the shot was detected such that at any given time, a bearing to a detected shooter location may be provided.

The relative position and motion sensors 130 and absolute position sensors 160 may be embedded in the shoulder pad arrays to provide information on the tilt angle and rate of rotation in order to properly account for the array position while collecting and processing shot data. Additionally, the soldier's movement data may be recorded onto a flash drive or other suitable memory device for later analysis, such as reviewing a soldier's response to shots fired.

In some embodiments other sensors 170 may be provided. For example a one or more temperature sensors, such as temperature sensor 171, may be integrated into the shoulder pad. A temperature sensor may provide information on air temperature, which can be used to determine the speed of sound, which is a variable that may be used in computation of range and adjusting for variations in the speed of sound based on temperature may increase the accuracy of the range computation. Temperature information, whether gathered from the same or different temperature sensors may also be used to correct for other temperature dependent effects, such as temperature dependent effects of motion measurement devices, such as gyros.

As another example, a soldier-wearable Precise Positioning System 173 (PPS) may be used to provide accurate position/orientation data for intermittent GPS coverage or GPS denied areas. This information may be provided to the CPU module 110 and used in computing absolute position of the soldier and origin of the projectile. In some embodiments the PPS utilizes the 3-axis gyroscope 133 and/or the 3-axis accelerometer 132 and/or 3-axis magnetometer 162. The soldier-wearable PPS 173 may be integrated with the existing soldiers computing and electronics platform.

As another example, a digital compass 175 may be included also to aid in translating any value representing a direction relative to the system to a direction relative to compass coordinate. In some embodiments, the digital compass 175 is implemented using software functions and data collected from the 3-axis magnetometer 162 and 3-axis accelerometer 132.

The digital compass 175 and GPS receiver 161 may be used to translate a shooter location, determined relative to the system, into an absolute coordinate system. GPS receiver 161 may be connected via USB to the digital signal processor 113. However, any suitable interface may be used. The positioning data provided by the GPS receiver and digital compass may be used when communicating shooter detection solutions over a network connection, or when providing display information to the soldier in a fixed coordinate system.

Additional I/O ports, such as USB ports 117 and Ethernet ports 118, may be used to provide diagnostic tools and integration of additional features (e.g., from third parties). Another I/O port provides connectivity to the hub electronics.

The WSLS may be powered by any suitable power source 150. In a preferred embodiment, the power source provides power for at least 12 hours of operation. In some embodiments, replicable and/or rechargeable batteries may be used. Batteries may be integrated into the shell (e.g., shoulder pad) or may be wired to the shell from another suitable location such as a pocket. Some embodiments may require DC to DC converters to obtain appropriate voltages for components. Suitable voltage regulators may be employed to maintain a sufficiently constant voltage level within specifications of the electronic hardware.

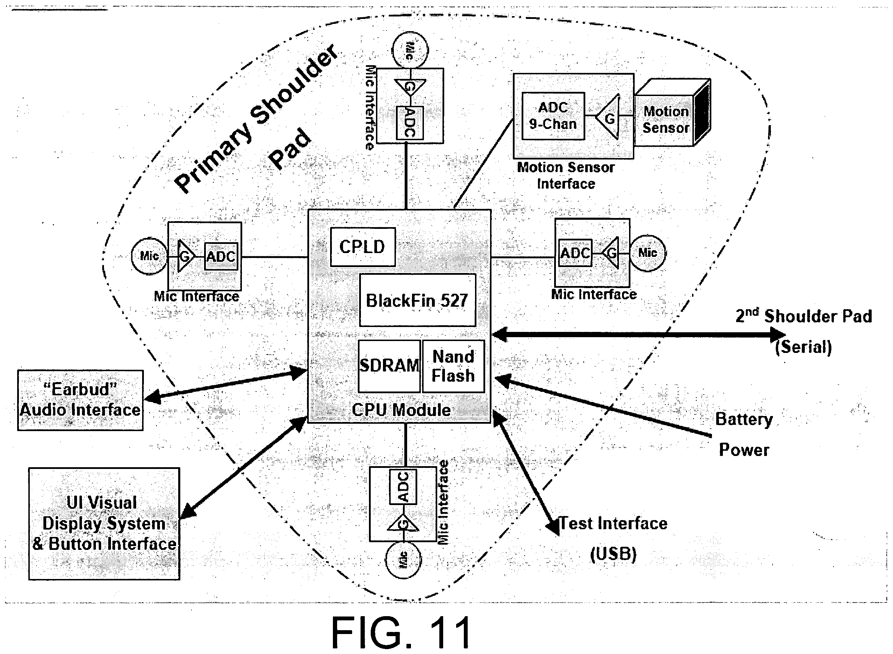

In some embodiments, a CPU module is shared by both shoulder pads. In some embodiments, this CPU module is integrated into a primary should pad. Optionally some of the relative position and motion sensors 130, absolute position sensors 160 and others sensors 170 are provided in only one of two shoulder pads. An embodiment of a primary should pad is illustrated in FIG. 11. Note that the illustrated microphone array includes four microphones; however, any suitable number of microphones may be present in the array (e.g., five).

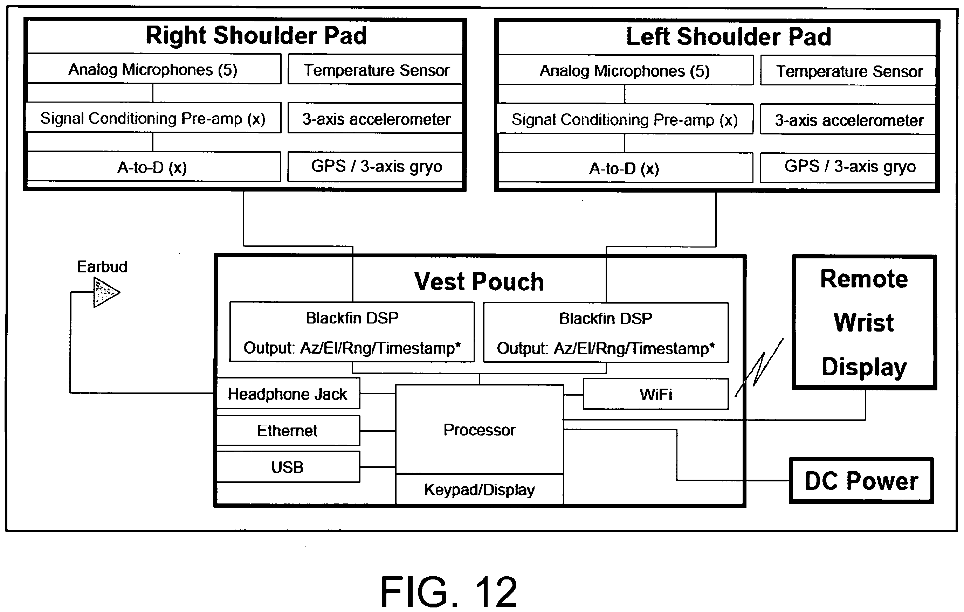

In some other embodiments, the CPU module 110 is provided in a handheld computer, personal digital assistant (PDA), or similar electronic device. The CPU module may be placed in a pocket or pouch of the soldier as shown in the block diagram of FIG. 12. In one embodiment, The CPU module utilizes a single board computer (e.g., Ampro ET1-802-R-12 module) configured with a suitable amount of RAM (e.g., 256 Mb). This processor may be a 1 GHz Pentium class processor which provides all of the digital processing necessary to convert the raw acoustic sample streams into localized shooter detection solutions.

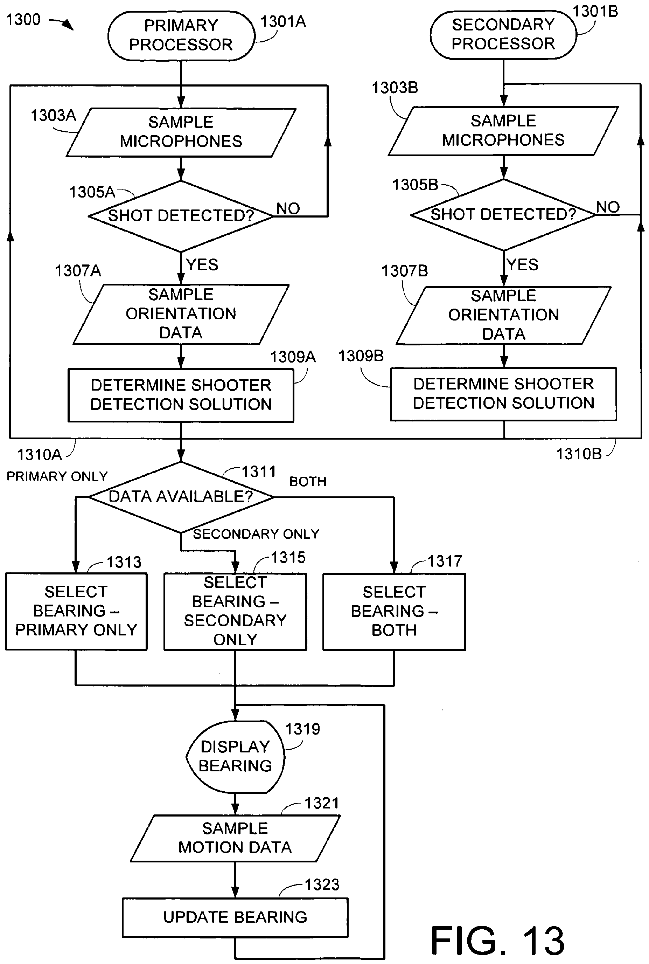

FIG. 13 provides a flow diagram 1300 for the operation of a two unit WSLS according to an embodiment where a primary and secondary processor are designated. The flow diagram begins for the primary processor at step 1301 A and for the secondary processor at step 1301B. Steps 1303A-B through 1309A-B may be performed by the primary and secondary processor independently, but in a similar way, and thus are described simultaneously. In the example embodiment, steps 1311 through 1323 are performed by the primary processor.

Initially at step 1303A-B, each processor samples the respective microphone array. The samples from the microphone array associated with the processor are analyzed in step 1305A-B to determine if features characteristic of a shot are present. If not, the flow diagram repeats steps 1303A-B and 1305A-B. These steps may be repeated, essentially continuously, to provide real-time monitoring.

When a processor detects a shot at step 1305A-B, that processor proceeds to step 1307A-B to acquire additional information to calculate a shooter detection solution in step 1309A-B. In step 1307A-B the orientation and motion of the microphone array is determined from samples obtained from position and motion sensors such as digital accelerometers and gyroscopes. In step 1309A-B a shooter detection solution is calculated using a suitable algorithm known in the art. The shooter detection solutions may include information such as shooter position, projectile trajectory, projectile caliber, time of fire, and the like. Additionally, in step 1309B, once a shooter detection solution has been calculated by the secondary processor, it is communicated to the primary processor. Any suitable mechanism may be used by the primary processor to determine if a solution is being prepared by the secondary processor.

When one or more shooter detection solutions become available to the primary processor, either from the primary processor itself and/or as communicated from a secondary processor, the process branches at step 1311 based on the information available to compute the shooter location. Because, in the embodiment illustrated, the shot detection steps are performed independently, it is possible for only one processor to register a shot and therefore provide a solution.

If a single solution is available, that solution is selected for display to the user (step 1313 or step 1315). If however, two solutions are available, any suitable technique may be used to select a preferred solution, or provide an estimate by combining both solutions (step 1317). The solutions may be combined, for example, using fusion as described above in connection with step 310 (FIG. 3). In some embodiments, different fusion techniques may be used for each component of the shooter detection solution. For example, the azimuth and range components of the fused solution may be derived using separate techniques.

In step 1319 the solution information is provided to the user through a suitable user interface. For example, the bearing information may be provided on a display or audibly communicated through a speaker. In step 1321, motion data is collected to update the solution information to account for any movement of the soldier subsequent to the detection of the shot. The motion data may be collected, for example from the sensors used in step 1305A or from any other suitable position and/or motion sensors. In step 1323, elements of the shooter detection solution may be updated to account for the movements of the soldier. For example the bearing and range may be updated based on detected movement of the wearer relative to the location of the wearer at the time the shot was detected. The updated information may then be provided to the user on the display. Steps 1319-1323 may be repeated periodically.

At any suitable time after detection of a shot at step 1305A-B, the respective processors may return to steps 1303A-B and 1305A-B to continue monitoring for subsequent shots. In the example flow diagram, the process flow returns, via path 1310A-B, to these steps after determination of the shooter detection solution at step 1309A-B. However, the monitoring process may continue at any suitable time subsequent to a shot detection.

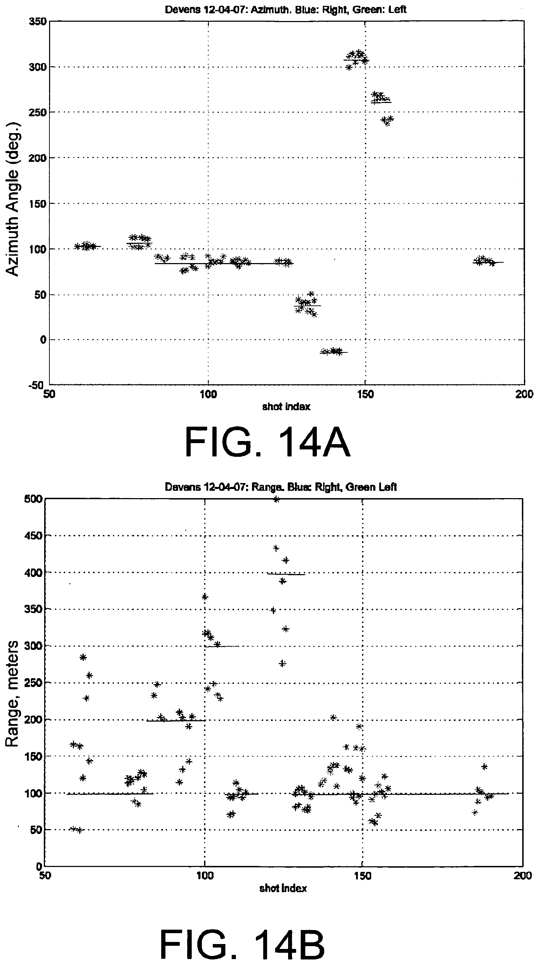

FIGs. 14A-14B provide field test results for the dual shoulder pad WSLS configuration. Under a wide variety of conditions, the expected standard deviation of the angular errors is on the order of 5-7 degrees with range errors less than 15%. Some of the spread in the data is related to whether the shoulder pad array had an unobstructed view to the shock and muzzle signals. As expected, estimates from the un-occluded shoulder pad are more accurate and stable than those produced by the occluded shoulder pad.

The shooter azimuth performance from both shoulder pad arrays for various test geometries is shown in FIG. 14A. The corresponding shooter range performance from both shoulder pad arrays for various test geometries is shown in FIG. 14B. In both plots, blue stars are from the right shoulder pad and the green stars are from the left shoulder pad. The data spans a large selection of test geometries: seven different azimuth angles and four shooter ranges (100 m - 400 m). The nominal azimuth and range for the data is represented by black lines. The data shows no signal distortion from shoulder plate reflections or vibrations and sufficient signal-to-noise ratio (SNR) to detect supersonic projectiles at long range. While this is a limited data set mostly at very close range, it clearly demonstrates the capability of a small aperture array to estimate the shooter azimuth with very reasonable accuracies. In addition, neither shoulder pad generated false alerts. The divergence of the results on the two different arrays for certain geometries shows the performance degradation for the array that has an obstructed path to the signals.

Additionally, FIG. 14A and 14B illustrate a scenario in which different fusion techniques are used for different components of a solution. FIG. 14A, illustrating azimuth data, indicates that averaging may be effective at improving the accuracy of azimuth data. FIG. 14B illustrates, though, that for range data one data set may be more accurate than another. Thus, embodiments are possible in which solutions are fused by selecting one component.

Having thus described at least one illustrative embodiment of the invention, various alterations, modifications, and improvements will readily occur to those skilled in the art.

For example, in embodiments described above, solutions are computed separately by each of multiple units. These solutions are fused in some suitable way. In some embodiments microphone and sensor outputs, rather than solutions, may be shared between units. Such raw data, rather than processed location information, may then be fused.

As another example, in embodiments described above, components such as microphones, motion and attitude sensors, and a signal processor are connected through a circuit substrate and then sealed within a housing to form a unit. The final shape of each unit is defined by the shape of the housing. Thus, units may be readily formed in different shapes by forming the housing in a different shape. The shape of the housing may be varied, for example, to produce units suitable for mounting in different locations, whether in different locations on the body of a person or in other locations where shooter localization is desired. As a specific example, units could be developed for mounting on the belt of an individual, such as on either hip. The shape of the housing may alternatively be varied to provide different levels of protection against projectiles or resistance to environmental factors.

Further embodiments described above include components dedicated for use in a shooter localization system. At least some of the components may be part of another system or may provide functions in addition to shooter localization. As a specific example, power for the shooter localization system may come from a battery or power pack that powers other electronic devices used by a solider. As an example of other functions that may be performed with components of the shooter localization system, the system may provide health monitoring for the wearer. In such an embodiment, the processor may receive and process inputs from sensors in addition to those sensors used for shooter localization. The system may then compute and communicate health information about the wearer. Inputs from the motion and attitude sensors, and in some embodiments, the microphones, of the shooter localization system may also be used in computing an indication of the health of the wearer. The communications components of the shooter localization system may then be used to communicate such information to another location, such as a command location or a medical aid location.

As another example, it is described that information about shooter location is communicated to a command or control location for coordination of response to a shot. Other uses of communication capabilities may be possible. For example, the shooter location systems of multiple individuals located in the same area may communicate in an ad hoc network. Such a network may be used to exchange information about shooter locations among systems worn by personnel in the same general area. Information exchanged in this fashion may be averaged or combined in some other way to increase the accuracy with which the origin of a projectile is determined.

Such alterations, modifications, and improvements are intended to be within the scope of the invention. Accordingly, the foregoing description is by way of example only and is not intended as limiting. The invention is limited only as defined in the following claims.

## Claims

1. A microphone array subassembly (200) adapted for use in a wearable shooter localization system, the subassembly comprising:
a domed substrate comprising:
an outer shell (410);
an inner shell (430);
a plurality of microphones (401) mounted in the outer shell; and
a processor (110) connected to receive outputs of the plurality of microphones (401), the processor being configured to process the outputs of the plurality of microphones to detect acoustic signals representative of a shot and to compute information indicating an origin of the shot,
**characterized in that** the processor (110) is mounted between the inner shell (430) and the outer shell (410), and **in that** the domed substrate is shaped to conform to portions of an upper arm and a shoulder of a human.

2. The microphone array subassembly (200) of claim 1, wherein the plurality of microphones comprises at least five microphones.

3. The microphone array subassembly (200) of claim 2, wherein the outer shell comprises a concave surface and the inner shell conforms to the outer shell and is attached to the Outer shell.

4. The microphone array subassembly (200) of claim 2, further comprising:
a memory storing computer-executable instructions that, when executed by the processor (110), adapt the processor to perform a method of processing the outputs of the plurality of microphones to detect the origin of the shot.

5. The microphone array subassembly (200) of claim 4, wherein:
the subassembly further comprises an orientation sensor coupled to the processor to provide orientation information about the subassembly, and
the method of processing the outputs of the plurality of microphones to compute the information indicating the origin of the shot is further based on the orientation information.

6. The microphone array subassembly (200) of any of claims 1 through 5, further comprising:
a flexible circuit assembly (420) disposed between the inner shell (430) and the outer shell (410).

7. The microphone array subassembly (200) of any of claims 1 through 6, wherein the domed substrate comprises an outer shell portion which is resistant to shrapnel.

8. A wearable shooter localization system comprising:
a plurality of microphone array subassemblies of the type recited in any of the preceding claims.

9. The wearable shooter localization system of claim 8, wherein each of the plurality of microphone array subassemblies is operably connected to provide data to a fusion module.

10. The wearable shooter localization system of claim 9, wherein:
the fusion module is configured to select data from one or more of the microphone array Subassemblies; and
when the fusion module selects the data to be used from more than one of the microphone array subassemblies, the fusion module provided an output based on the selected data from the one or more microphone array subassemblies.

11. The wearable shooter localization system of claim 8, wherein the plurality of microphone array subassemblies comprises first and second microphone array subassemblies.

12. A shooter localization method comprising the steps of:
receiving, by a processor (110) located in a microphone array subassembly (200), plural signals from plural microphones (401) affixed to the microphone array subassembly, the plural signals representative of a shot;
computing, by the processor (110), first information indicating an origin of the shot, wherein the microphone array subassembly (200) comprises an inner shell (430) and an outer shell (410) conforming to the inner shell, a plurality of microphones (401) mounted in the outer shell; and
**characterized in that** the microphone array assembly is mounted on a shoulder and upper arm of a human and **in that** the processor is located between the inner shell and the outer shell.

13. The shooter localization method of claim 12, further comprising:
receiving, by the processor (110), a signal from an orientation sensor providing orientation information about the subassembly, wherein the computing first information indicating an origin of the shot is further based on the orientation information.

14. The shooter localization method of claim 12 or 13, further comprising:
transmitting the first information indicating an origin of the shot to a fusion module that is configured to compute second information indicating an origin of the shot using the first information indicating an origin of the shot.

15. The shooter localization method of claim 14 that further comprises the acts of:
receiving, by the fusion module, plural first information indicating an origin of a shot from plural microphone array subassemblies;
computing, by the fusion module, second information indicating an origin of the shot based upon the plural first information; and
transmitting the second information indicating an origin of the shot for audio or visual display to a wearer of a microphone array subassembly.

## Patentansprüche

1. Mikrofongruppenunteranordnung (200), die für eine Verwendung in einem tragbaren Schützenlokalisierungssystem ausgelegt ist, wobei die Unteranordnung Folgendes umfasst:
ein gewölbtes Substrat, das Folgendes umfasst:
eine äußere Hülle (410);
eine innere Hülle (430);
mehrere Mikrofone (401), die in der äußeren Hülle angebracht sind; und
einen Prozessor (110), der angeschlossen ist, um Ausgaben der mehreren Mikrofone (401) zu empfangen, wobei der Prozessor konfiguriert ist,
die Ausgaben der mehreren Mikrofone zu verarbeiten, um akustische Signale zu detektieren, die einen Schuss repräsentieren, und Informationen zu berechnen, die einen Ursprung des Schusses angeben,
**dadurch gekennzeichnet, dass** der Prozessor (110) zwischen der inneren Hülle (430) und der äußeren Hülle (410) angebracht ist, und dadurch, dass
das gewölbte Substrat so geformt ist, dass es mit Teilen eines Oberarms und einer Schulter eines Menschen übereinstimmt.

2. Mikrofongruppenunteranordnung (200) nach Anspruch 1, wobei die mehreren Mikrofone mindestens fünf Mikrofone umfassen.

3. Mikrofongruppenunteranordnung (200) nach Anspruch 2, wobei die äußere Hülle eine konkave Fläche umfasst und die innere Hülle mit der äußeren Hülle übereinstimmt und an der äußeren Hülle befestigt ist.

4. Mikrofongruppenunteranordnung (200) nach Anspruch 2, die ferner Folgendes umfasst:
einen Speicher, der computerausführbare Anweisungen speichert, die dann, wenn sie durch den Prozessor (110) ausgeführt werden, den Prozessor anpassen, damit er ein Verfahren des Verarbeitens der Ausgaben der mehreren Mikrofone ausführen kann, um den Ursprung des Schusses zu detektieren.

5. Mikrofongruppenunteranordnung (200) nach Anspruch 4, wobei:
die Unteranordnung ferner einen Ausrichtungssensor umfasst, der an den Prozessor gekoppelt ist, um Ausrichtungsinformationen über die Unteranordnung zu liefern, und
das Verfahren des Verarbeitens der Ausgaben der mehreren Mikrofone, um die Informationen, die den Ursprung des Schusses angeben, zu berechnen, ferner auf den Ausrichtungsinformationen beruht.

6. Mikrofongruppenunteranordnung (200) nach einem der Ansprüche 1 bis 5, die ferner Folgendes umfasst:
eine flexible Schaltungsanordnung (420), die zwischen der inneren Hülle (430) und der äußeren Hülle (410) angeordnet ist.

7. Mikrofongruppenunteranordnung (200) nach einem der Ansprüche 1 bis 6, wobei das gewölbte Substrat einen äußeren Hüllenabschnitt umfasst, der beständig gegen Schrapnell ist.

8. Tragbares Schützenlokalisierungssystem, das Folgendes umfasst:
mehrere Mikrofongruppenunteranordnungen des Typs nach einem der vorhergehenden Ansprüche.

9. Tragbares Schützenlokalisierungssystem nach Anspruch 8, wobei jede der mehreren Mikrofongruppenunteranordnungen betriebstechnisch angeschlossen ist, um einem Fusionsmodul Daten zu liefern.

10. Tragbares Schützenlokalisierungssystem nach Anspruch 9, wobei:
das Fusionsmodul konfiguriert ist, Daten von einer oder mehreren der Mikrofongruppenunteranordnungen auszuwählen; und
dann, wenn das Fusionsmodul die zu verwendenden Daten von mehr als einer der Mikrofongruppenunteranordnungen auswählt, das Fusionsmodul eine Ausgabe anhand der ausgewählten Daten von der einen oder den mehreren Mikrofongruppenunteranordnungen bereitstellt.

11. Tragbares Schützenlokalisierungssystem nach Anspruch 8, wobei die mehreren Mikrofongruppenunteranordnungen eine erste und eine zweite Mikrofongruppenunteranordnung umfassen.

12. Schützenlokalisierungsverfahren, das die folgenden Schritte umfasst:
Empfangen durch einen Prozessor (110), der sich in einer Mikrofongruppenunteranordnung (200) befindet, mehrerer Signale von mehreren Mikrofonen (401), die an der Mikrofongruppenunteranordnung angebracht sind, wobei die mehren Signale einen Schuss repräsentieren;
Berechnen durch den Prozessor (110) erster Informationen, die einen Ursprung des Schusses angeben, wobei die Mikrofongruppenunteranordnung (200) eine innere Hülle (430) und eine äußere Hülle (410), die mit der inneren Hülle übereinstimmt, umfasst, wobei mehrere Mikrofone (401) in der äußeren Hülle angebracht sind; und
**dadurch gekennzeichnet, dass** die Mikrofongruppenunteranordnung auf einer Schulter und einem Oberarm eines Menschen angebracht ist, und dass
sich der Prozessor zwischen der inneren Hülle und der äußeren Hülle befindet.

13. Schützenlokalisierungsverfahren nach Anspruch 12, das ferner Folgendes umfasst:
Empfangen durch den Prozessor (110) eines Signals von einem Ausrichtungssensor, der Ausrichtungsinformationen über die Unteranordnung liefert, wobei das Berechnen erster Informationen, die einen Ursprung des Schusses angeben, ferner auf den Ausrichtungsinformationen beruht.

14. Schützenlokalisierungsverfahren nach Anspruch 12 oder 13, das ferner Folgendes umfasst:
Senden der ersten Informationen, die einen Ursprung des Schusses angeben, an ein Fusionsmodul, das konfiguriert ist, zweite Informationen, die einen Ursprung des Schusses angeben, unter Verwendung der ersten Informationen, die einen Ursprung des Schusses angeben, zu berechnen.

15. Schützenlokalisierungsverfahren nach Anspruch 14, das ferner die folgenden Vorgänge umfasst:
Empfangen durch das Fusionsmodul mehrerer erster Informationen, die einen Ursprung eines Schusses angeben, von mehreren Mikrofongruppenunteranordnungen;
Berechnen durch das Fusionsmodul zweiter Informationen, die einen Ursprung des Schusses angeben, anhand der mehreren ersten Informationen; und
Senden der zweiten Informationen, die einen Ursprung des Schusses angeben, für eine Audio- oder eine visuelle Anzeige an einen Träger einer Mikrofongruppenunteranordnung.

## Revendications

1. Sous-ensemble réseau de microphones (200) conçu pour être utilisé dans un système portatif de localisation de tireur, le sous-ensemble comprenant :
un substrat bombé comprenant :
une enveloppe extérieure (410) ;
une enveloppe intérieure (430) ;
une pluralité de microphones (401) montée dans l'enveloppe extérieure ; et
un processeur (110) connecté pour recevoir des sorties de la pluralité de microphones (401), le processeur étant conçu pour traiter les sorties de la pluralité de microphones afin de détecter des signaux acoustiques représentatifs d'un tir, et calculer une information indiquant une origine du tir ;
**caractérisé en ce que** le processeur (110) est monté entre l'enveloppe intérieure (430) et l'enveloppe extérieure (410), et **en ce que** le substrat bombé est façonné pour s'adapter à des parties d'un bras et d'une épaule d'un humain.

2. Sous-ensemble réseau de microphones (200) selon la revendication 1, dans lequel la pluralité de microphones comprend au moins cinq microphones.

3. Sous-ensemble réseau de microphones (200) selon la revendication 2, dans lequel l'enveloppe extérieure comprend une surface concave, et l'enveloppe intérieure s'adapte à l'enveloppe extérieure et est fixée à l'enveloppe extérieure.

4. Sous-ensemble réseau de microphones (200) selon la revendication 2, comprenant en outre :
une mémoire stockant des instructions exécutables par ordinateur qui, lorsqu'elles sont exécutées par le processeur (110), amènent le processeur à effectuer un procédé consistant à traiter les sorties de la pluralité de microphones afin de détecter l'origine du tir.

5. Sous-ensemble réseau de microphones (200) selon la revendication 4, dans lequel :
le sous-ensemble comprend en outre un capteur d'orientation couplé au processeur afin de fournir une information d'orientation sur le sous-ensemble ; et
le procédé consistant à traiter les sorties de la pluralité de microphones pour calculer l'information indiquant l'origine du tir repose en outre sur l'information d'orientation.

6. Sous-ensemble réseau de microphones (200) selon l'une quelconque des revendications 1 à 5, comprenant en outre :
un ensemble circuit souple (420) disposé entre l'enveloppe intérieure (430) et l'enveloppe extérieure (410).

7. Sous-ensemble réseau de microphones (200) selon l'une quelconque des revendications 1 à 6, dans lequel le substrat bombé comprend une partie d'enveloppe extérieure qui est résistante à un éclat d'obus.

8. Système portatif de localisation de tireur, comprenant :
une pluralité de sous-ensembles réseaux de microphones du type mentionné dans l'une quelconque des revendications précédentes.

9. Système portatif de localisation de tireur selon la revendication 8, dans lequel chaque sous-ensemble de la pluralité de sous-ensembles réseaux de microphones est connecté de manière fonctionnelle pour fournir des données à un module de fusion.

10. Système portatif de localisation de tireur selon la revendication 9, dans lequel :
le module de fusion est conçu pour sélectionner des données parmi un ou plusieurs sous-ensembles des sous-ensembles réseaux de microphones ; et
quand le module de fusion sélectionne les données à utiliser parmi plusieurs des sous-ensembles réseaux de microphones, le module de fusion fournit une sortie sur la base des données sélectionnées parmi le ou les sous-ensembles réseaux de microphones.

11. Système portatif de localisation de tireur selon la revendication 8, dans lequel la pluralité de sous-ensembles réseaux de microphones comprend des premier et second sous-ensembles réseaux de microphones.

12. Procédé de localisation de tireur comprenant les étapes consistant à :
recevoir, par un processeur (110) situé dans un sous-ensemble réseau de microphones (200), une pluralité de signaux provenant d'une pluralité de microphones (401) fixés au sous-ensemble réseau de microphones, la pluralité de signaux étant représentative d'un tir ;
calculer, par le processeur (110), une première information indiquant une origine du tir, le sous-ensemble réseau de microphones (200) comprenant une enveloppe intérieure (430) et une enveloppe extérieure (410) s'adaptant à l'enveloppe intérieure, une pluralité de microphones (401) étant montée dans l'enveloppe extérieure ; et
**caractérisé en ce que** l'ensemble réseau de microphones est monté sur une épaule et un bras d'un humain, et **en ce que** le processeur est situé entre l'enveloppe intérieure et l'enveloppe extérieure.

13. Procédé de localisation de tireur selon la revendication 12, consistant en outre à :
recevoir, par le processeur (110), un signal provenant d'un capteur d'orientation fournissant une information d'orientation sur le sous-ensemble, le calcul d'une première information indiquant une origine du tir étant en outre basé sur l'information d'orientation.

14. Procédé de localisation de tireur selon la revendication 12 ou 13, consistant en outre à :
transmettre la première information indiquant une origine du tir à un module de fusion conçu pour calculer une seconde information indiquant une origine du tir au moyen de la première information indiquant une origine du tir.

15. Procédé de localisation de tireur selon la revendication 14, comprenant en outre les actions consistant à :
recevoir, par le module de fusion, une pluralité de premières informations indiquant une origine d'un tir provenant d'une pluralité de sous-ensembles réseaux de microphones ;
calculer, par le module de fusion, une seconde information indiquant une origine du tir sur la base de la pluralité de premières informations ; et
transmettre la seconde information indiquant une origine du tir à un porteur d'un sous-ensemble réseau de microphones en vue de son affichage audio ou visuel.
